Europäisches Patentamt

European Patent Office

Office européen des brevets

(19)

(11) **EP 1 102 041 A1**

(12) **EUROPÄISCHE PATENTANMELDUNG**

(43) Veröffentlichungstag:
   **23.05.2001 Patentblatt 2001/21**

(51) Int Cl.⁷: **G01F 1/708**, G01F 1/704,
   **G01F 1/712**

(21) Anmeldenummer: **99123073.1**

(22) Anmeldetag: **20.11.1999**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **Meili, Reto T.**
   **8044 Zürich (CH)**

(72) Erfinder: **Meili, Reto T.**
   **8044 Zürich (CH)**

(74) Vertreter: **Frei, Alexandra Sarah**
   **Frei Patentanwaltsbüro**
   **Postfach 768**
   **8029 Zürich (CH)**

(54) **Messverfahren und Messsystem zum Ausführen des Messverfahrens**

(57)   Die vorliegende Erfindung bezieht sich auf ein Verfahren zum Bestimmen von ein-bzw. zweidimensionalen Geschwindigkeiten von Strömungen bzw. Strömen, unter Verwendung von Fluktuationen charakteristischer physikalischer Parameter, wobei Fluktuationen der Parameter von mindestens zwei Messköpfen (1,1', 1") erfasst werden, erfasste Fluktuationen der Parameter in Messsignale gewandelt werden, diese Messsignale korreliert werden, aus dieser Korrelation Verschiebungszeiten zu den Messköpfen hin bestimmt wird und als Messkopfabstand der gegenseitige Abstand der Messköpfe ermittelt wird, woraus Geschwindigkeiten in Strömungen bzw. Strömen aus dem Quotienten des Messkopfabstandes und den Verschiebungszeiten gebildet werden.

Fig. 3

EP 1 102 041 A1

**Beschreibung**

Die Erfindung betrifft ein Messverfahren zum Bestimmen von Konzentrationen bzw. von Geschwindigkeiten von Strömungen bzw. Strömen sowie ein Messsystem zum Ausführen des Messverfahrens gemäss der Definition der Patentansprüche.

In Forschung und Industrie ist die Bestimmung von Konzentrationen bzw. von Geschwindigkeiten von Strömungen bzw. Strömen von grosser Bedeutung. Es handelt sich bspw. um Mehrphasenstömungen von Feststoffen in Gasen bzw. Flüssigkeiten, oder von Gasblasen in Flüssigkeiten, oder von Flüssigkeitstropfen in Gasen bzw. Flüssigkeiten, usw.. Auch handelt es sich bspw. um bewegte Gegenstände, Schüttgüter, Flüssigkeiten, Flüssigkeitsoberflächen, Papier- und Stoffbahnen, usw.. Die Bestimmung von Konzentrationen bzw. von Geschwindigkeiten in Strömungen bzw. Strömen ermöglichen vielfältige Informationen wie bspw. Dichten, Turbulenzgrade, usw..

Bestehende Messverfahren wie bspw. die Staub-Konzentrationsmessung nach dem Transmissionsprinzip oder bspw. die Laser Doppler Anemometrie weisen Nachteile auf. Bspw. sind diese Messsysteme anfällig auf Verschmutzungen und sie sind anfällig bei hohen bzw. tiefen Temperaturen. Somit werden Reinigungen und Demontagen der Messsysteme erforderlich, wodurch bspw. kontinuierliche Messungen/Prozessüberwachungen verunmöglicht werden. Solche Messsystem sind überdies teuer in der Anschaffung, teuer und aufwendig im Unterhalt und in der Anwendung.

Aufgabe der vorliegenden Erfindung ist es ein Messverfahren zum Bestimmen von Konzentrationen bzw. von Geschwindigkeiten von Strömungen bzw. Strömen sowie ein Messsystem zum Ausführen dieses Messverfahrens bereitzustellen, welche die vorgenannten Nachteile beheben. Dass Messverfahren und sein Messsystem sollen mit gängigen und bewährten Industriestandards kompatibel sein.

Diese Aufgabe wird durch die Erfindung gemäss den Patentansprüchen gelöst.

Die Erfindung dient zum Bestimmen von Konzentrationen bzw. von Geschwindigkeiten von Strömungen bzw. Strömen. Sie betrifft Strömungen mit verschiedenen Phasenanteilen (Mehrphasenströmungen), wie bspw. von Feststoffen in Gasen bzw. Flüssigkeiten, oder von Gasblasen in Flüssigkeiten, oder von Flüssigkeitstropfen in Gasen bzw. Flüssigkeiten, usw. und sie betrifft Ströme, wie bspw. von bewegte Gegenstände, Schüttgüter, Flüssigkeiten, Flüssigkeitsoberflächen, Papier- und Stoffbahnen, usw.

Für ein Bestimmen von Konzentrationen von Strömungen bzw. Strömen werden für Konzentrationen charakteristische physikalische Grössen wie bspw. rückgestreute, emittierte oder transmittierte Licht-, Strahlungs- bzw. Schallintensitäten, Permeabilitäten, Dielektrizitätskonstanten (Permittivitäten), Leitfähigkeiten, Beugungen von Mikrowellen, magnetische- oder Kern-Spin-Resonanzen bzw. Temperaturen gemessen. Für ein quantitatives Bestimmen von bspw. Feststoffkonzentrationen werden Kalibrierungsparameter bspw. über Kalibrierungsversuche ermittelt, indem charakteristische physikalische Grössen bei verschiedenen bekannten Konzentrationen gemessen werden und daraus eine mathematische Funktion abgeleitet wird. Im Allgemeinen sind solche Kalibrierungsparameter abhängig von den relevanten physikalischen Eigenschaften der Stoffe der Strömungen bzw. Ströme.

Für ein Bestimmen von Geschwindigkeiten von Strömungen bzw. Strömen werden die Fluktuationen von charakteristische physikalische Grössen wie bspw. von rückgestreuten, emittierten oder transmittierten Licht-, Strahlungs- bzw. Schallintensitäten, Permeabilitäten, Dielektrizitätskonstanten (Permittivitäten), Leitfähigkeiten, Beugungen von Mikrowellen, magnetische- oder Kern-Spin-Resonanzen bzw. Temperaturen mittels zwei bzw. drei Messköpfe lokal gemessen und mittels stochastischer Methoden korreliert. Der Vergleich mehrerer derart ermittelter Messsignale ermöglicht das korrelative Bestimmen von bspw. Feststoff-, resp. Cluster bzw. Blasengeschwindigkeiten. Das Bestimmen von Geschwindigkeiten erfolgt für ein- oder zweidimensionale Strömungen bzw. Ströme. Das hierfür verwendete Messsystem besteht aus einer Messsonde, in der alle optischen und elektronischen Komponenten integriert und vor Umwelteinflüssen wirkungsvoll geschützt sind. Es besteht ferner aus einem Netzgerät zur Versorgung der Messsonde und aus einer computergesteuerten Auswerteeinheit zum Auswerten der von der Messsonde gemessenen Messsignale. Insbesondere wird zur Geschwindigkeitsbestimmung ein Messsystem mit zwei oder drei zueinander versetzt angeordneten Messköpfen verwendet. Die Messauflösung wird durch den Abstand der Messköpfe zueinander definiert. Aus der Korrelation werden Verschiebungszeiten zwischen den Messköpfen bestimmt. Geschwindigkeiten in Strömungen bzw. Strömen ergeben sich aus Quotienten von Messkopfabstand und Verschiebungszeiten.

Die Erfindung wird im folgenden anhand der folgenden Figuren im Detail erläutert.

Fig. 1 zeigt schematisch einen Teil eines Messsystems zum Ausführen des Messverfahrens mit zwei Messkanälen und eingezeichneten Flusspfeilen.

Fig. 2 zeigt schematisch einen Teil eines Messsystems zum Ausführen des Messverfahrens mit drei Messkanälen und eingezeichneten Flusspfeilen.

Fig. 3 zeigt eine perspektivische Ansicht eines Teils einer ersten beispielhaften Ausführungsform einer Messsonde eines Messsystems gemäss Fig. 1.

Fig. 4 zeigt eine Draufsicht eines Teils der ersten beispielhaften Ausführungsform der Messsonde gemäss Fig. 3.

Fig. 5 zeigt eine Schnittansicht entlang DD' eines Teils der ersten beispielhaften Ausführungsform der Messsonde gemäss Fig. 4.

Fig. 6 zeigt eine Schnittansicht eines Teils einer weiteren beispielhaften Ausführungsform einer Messsonde eines Messsystems gemäss Fig. 2.

Fig. 7 zeigt eine Draufsicht eines Teils der weiteren beispielhaften Ausführungsform der Messsonde gemäss Fig. 6.

Fig. 8 zeigt eine erste Schnittansicht entlang AA' eines Teils der weiteren beispielhaften Ausführungsform der Messsonde gemäss Fig. 6.

Fig. 9 zeigt eine weitere Schnittansicht entlang BB' eines Teils der weiteren beispielhaften Ausführungsform der Messsonde gemäss Fig. 6.

Fig. 10 zeigt eine weitere Schnittansicht entlang CC' eines Teils der weiteren beispielhaften Ausführungsform der Messsonde gemäss Fig. 6.

Fig. 11 zeigt schematisch einen Teil einer beispielhaften Ausführungsform einer Auswerteeinheit eines Messsystems.

Fig. 12 zeigt eine beispielhafte Ermittlung eines Geschwindigkeitsvektors.

Fig. 13 zeigt eine perspektivische Ansicht eines Teils einer weiteren beispielhaften Ausführungsform einer Messsonde eines Messsystems mit einem Messkanal.

Fig. 14 zeigt eine Schnittansicht eines Teils einer beispielhaften Ausführungsform einer Messsonde eines Messsystems mit Normierungsvorrichtung.

Fig. 15 zeigt eine Schnittansicht eines Teils einer beispielhaften Ausführungsform einer Messsonde eines Messsystems mit Homogenisiervorrichtung.

Das vorliegende Messverfahren zum Bestimmen von Konzentrationen bzw. Geschwindigkeiten von Strömungen bzw. Strömen basiert auf der Messung von Konzentrationen bzw. von Fluktuationen charakteristischer physikalischer Parameter wie bspw. von rückgestreuten, emittierten oder transmittierten Licht-, Strahlungs-bzw. Schallintensitäten, Permeabilitäten, Dielektrizitätskonstanten (Permittivitäten), Leitfähigkeiten, Beugungen von Mikrowellen, magnetische- oder Kern-Spin-Resonanzen bzw. Temperaturen. Das Messverfahren ist für die Messung jeder Art von Konzentrationen bzw. von Fluktuationen charakteristischer physikalischer Parameter anwendbar. Einzig aus Platzgründen wird die Erfindung im folgenden am Beispiel der Licht-Rückstreuung von Strömungen bzw. Strömen im Detail erläutert. Dem Fachmann steht es bei Kenntnis der vorliegenden Erfindung frei, das Messverfahren auch für die Messung anderer, nicht im Detail erläuterter Konzentrationen bzw. Fluktuationen von charakteristischen physikalischen Parametern von Strömungen bzw. Strömen anzuwenden.

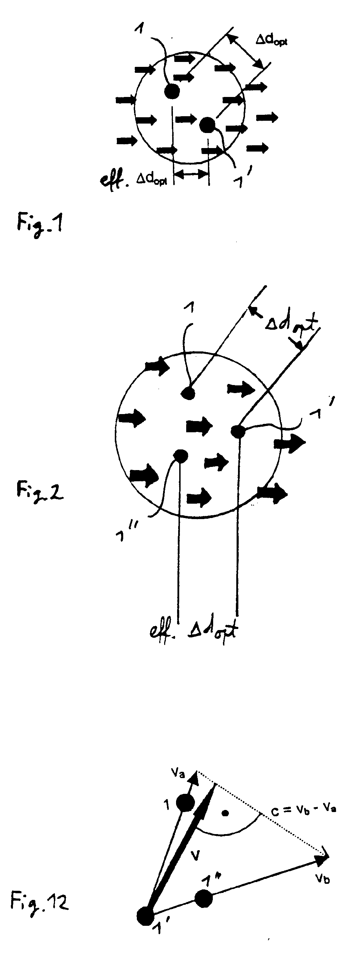

Für eine Bestimmung der Konzentration von Strömungen bzw. Strömen wird als Parameter bspw. die rückgestreute Lichtintensität gemessen. Für eine quantitative Bestimmung von Konzentrationen wie bspw. Feststoffkonzentrationen werden Kalibrierungsparameter bspw. über eine Kalibrierkurve ermittelt, welche am Beispiel vom Parameter Licht-Rückstreuung von optischen Eigenschaften wie Farbe, Oberfläche des Festkörpers und dessen Korngrösse abhängt. Vorteilhafterweise wird ein Messsystem mit mindestens einem Messkopf 1 (siehe Fig. 13) verwendet oder es wird ein Messsystem mit mindestens zwei zueinander versetzt angeordneten Messköpfen 1,1',1" verwendet (siehe Fig. 1, 2). Mit dem Messystem werden Parameter erfasst und erfasste Parameter in Messsignale gewandelt. Diese Messsignale werden als Funktion der Konzentration aufgetragen werden und mittels Kalibrierungsparameter über eine mathematische Funktion miteinander verknüpft.

Für eine Bestimmung der Geschwindigkeit von Strömungen bzw. Strömen werden Fluktuationen der rückgestreuten Lichtintensität gemessen und mittels stochastischen Methoden korreliert. Der Vergleich mehrerer Messsignale ermöglicht die korrelative Bestimmung von bspw. Feststoff- resp. Cluster- und Blasengeschwindigkeiten. Für die Bestimmung der Geschwindigkeit eines eindimensionalen Flusses, bspw. in einem Leitungsrohr wird vorteilhafterweise ein Messsystem mit zwei zueinander versetzt angeordneten Messköpfen 1,1' verwendet (siehe Fig. 1). Für die Bestimmung der Geschwindigkeit eines zweidimensionalen Flusses in einer Ebene wird vorteilhafterweise ein Messsystem mit drei zueinander versetzt angeordneten Messköpfen 1,1',1" verwendet (siehe Fig. 2). Hierbei werden makroskopisch homogene Strömungen bzw. Ströme vorausgesetzt, deren Fluss im Messvolumen vor den Messköpfen konstant ist. Auch müssen für eine korrekte Messung alle Messköpfe derart angeordnet sein, dass von der Strömung bzw. vom Strom rückgestreutes Licht von ihnen erfasst wird. Dies wird in den schematischen Fig. 1 und 2 durch parallele und weitgehend gleich lange Flusspfeile angezeigt. Die zwei oder drei Messköpfe senden Licht in Form von zwei oder drei Lichtstrahlen aus.

Die Messauflösung wird durch den optischen Abstand der Messköpfe $\Box d_{opt}$ zueinander definiert. Vorteilhafterweise sind die Messköpfe in einer Messebene senkrecht zur Strömung bzw. zum Strom ausgerichtet. Im Beispiel der Verwendung eines Parameters Licht-Rückstreuung wird als Messkopfabstand der optische Messkopfabstand, d.h. der gegenseitige Abstand der von den Messköpfen ausgesandten Lichtstrahlen am Ort der Rückstreuung in der Messebene definiert. Der effektive optische Abstand der Messköpfe eff. $\Box d_{opt}$ ist die in der Messebene senkrecht zur Strömung bzw. zum Strom durchgeführte Projektion des optischen Messkopfabstand $\Box d_{opt}$ parallel zum Fluss.

Typische optische Messkopfabstände betragen einige mm. Typische Geschwindigkeiten, die mit dem Messsystem gemessen werden können betragen 0.05 bis 200 m/s. Konzentrationen können mit dem Messsystem mit Messfrequenzen von 1 bis 100 kHz gemessen werden. Geschwindigkeiten können mit dem Messsystem mit Messfrequenzen von 10 bis 5000 Hz gemessen werden. Diese Werte sind beispielhaft und hängen von der verwendeten Hardware (Messsonde, computergestützte Auswerteeinheit, Messleitungen, usw.) ab, diese Werte schränken somit den Anwendungsbereich der Erfindung nicht ein.

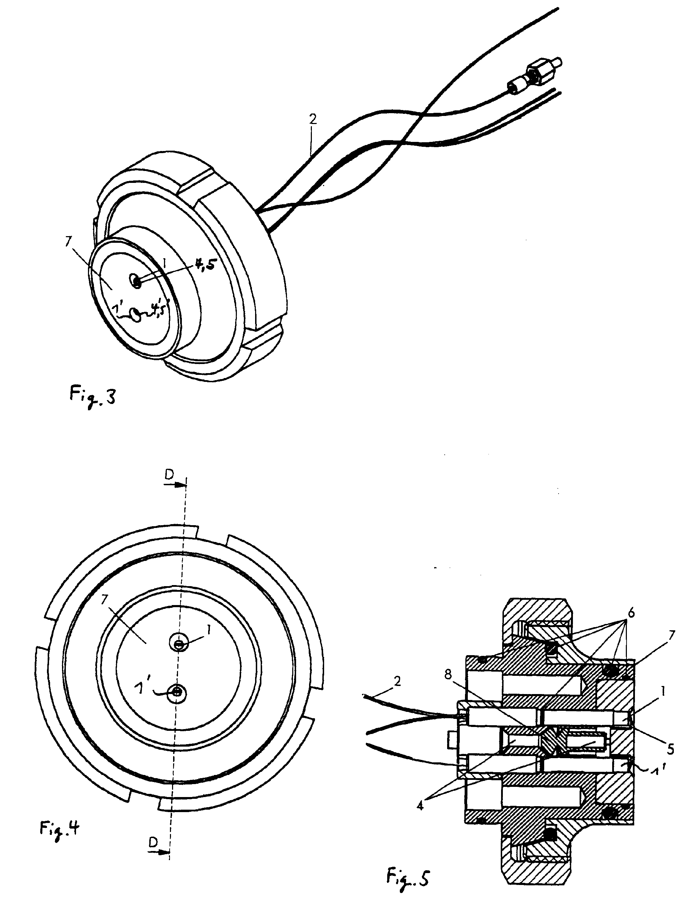

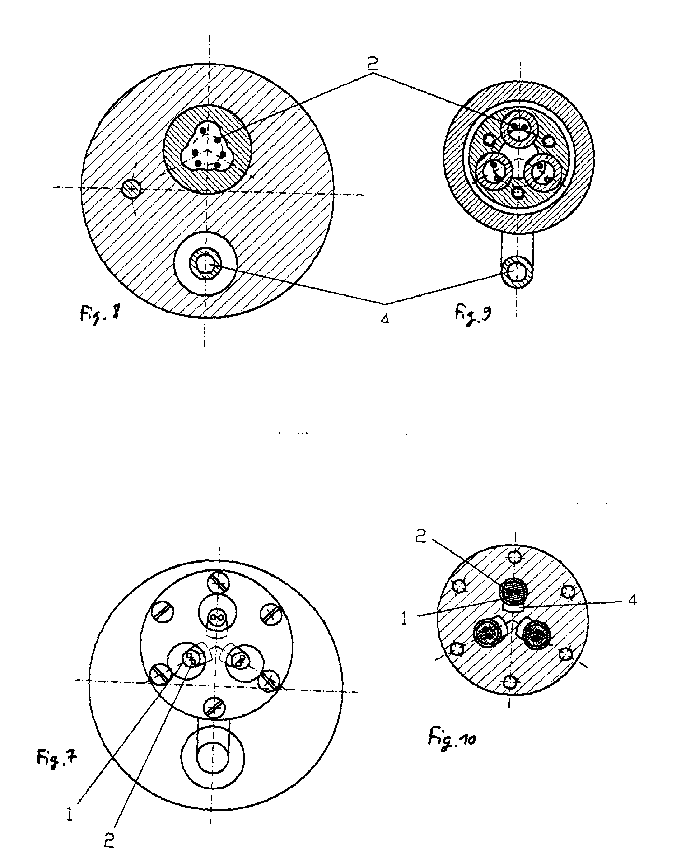

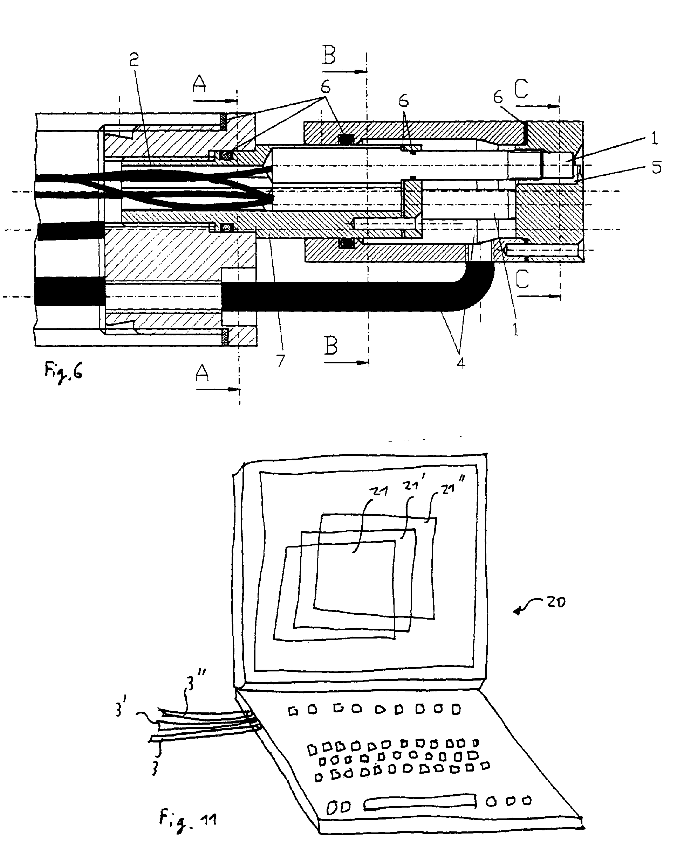

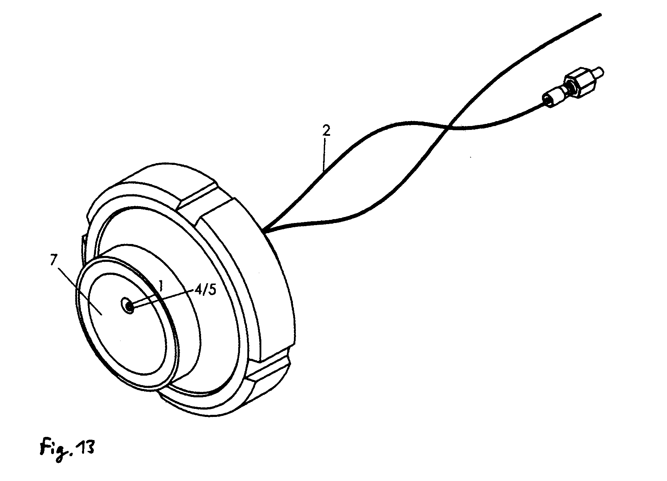

Die Figuren 3 bis 10 und 13 zeigen Teile von beispielhaften Ausführungsformen von Messköpfen 1,1',1" des Messsystems. Das Licht wird über Lichtleitermittel 2 in einer Messsonde 10 auf eine spezielle Optik geführt, welche ein je nach Anwendung definiertes Messvolumen bildet. Die Intensität vom von der Strömung bzw. vom Strom rückgestreuten Licht wird über Lichtleitermittel 2 auf Sensoren der Messsonde geführt und erfasst. Alle Arten von Lichtquellen wie Laser, Kaltlichtlampen, usw. lassen sich im vorliegenden Messverfahren zum Bestimmen von Konzentrationen bzw. Geschwindigkeiten verwenden. Bekannte Laser sind bspw. Laserdioden, bekannte Lichtleitermittel sind bspw. Glasfasern, bekannte Sensoren sind bspw. Photodioden. Diese Sensoren liefern Messignale, welche über Messleitungen 3,3',3" zu einer Auswerteeinheit geleitet werden. Die Messsignale der zwei oder drei Messköpfe werden vorteilhafterweise über zwei oder drei Messleitungen geleitet, d.h. jeder Messkopf hat eine Messleitung.

Aufgrund dieser sehr empfindlichen photometrischen Erfassung der zurückgestreuten Lichtintensitäten treten selbst bei sehr gleichmässigem Fluss stochastische Fluktuationen der Messsignale auf. Solche Fluktuationen werden zur Bestimmung der Geschwindigkeit ausgewertet, indem die Messsignale der zwei oder drei Messköpfen korreliert werden. Aus dieser Korrelation wird die Verschiebungszeit zu den Messköpfen hin bestimmt. Hierbei wird als Verschiebungszeit □□die Zeit definiert, die einem bevorzugten Korrelationskoeffizienten entspricht. Die numerische Berechnung der Korrelation erfolgt mittels bekannter mathematischer Methoden, bspw. als Kreuzkorrelation mittels des Wiener-Khinchin-Theorems, oder als Möbius-Korrelation. Im Falle der Kreuzkorrelation wird als bevorzugter Korrelationskoeffizient der maximale Korrelationskoeffizient verwendet. Dem Fachmann stehen bei Kenntnis der vorliegenden Erfindung hierbei vielfältige Möglichkeiten frei.

Im Fall der eindimensionalen Geschwindigkeitsbestimmung mittels zweier Messköpfe ergibt sich der Betrag und die Richtung der Geschwindigkeit V in Richtung der Verbindung der zwei Messköpfe direkt aus dem Quotienten des effektiven optischen Messkopfabstandes eff. □d$_{opt}$ und der Verschiebungszeit □:

$$V = \frac{eff.\Delta d_{opt.}}{\tau}$$

Im Fall der zweidimensionalen Geschwindigkeitsbestimmung mittels dreier Messköpfe werden, analog zum eindimensionalen Fall, drei Verschiebungszeiten □□ermittelt. Hierbei werden drei effektive optische Messkopfabstände eff. □d$_{opt}$ berücksichtigt. Durch Quotientenbildung dieser drei effektiven optischen Messkopfabstände eff. □d$_{opt}$ mit den entsprechenden Verschiebungszeiten □ werden drei Geschwindigkeitsbeträge v$_a$, v$_b$, v$_c$ ermittelt. Diese Geschwindigkeitsbeträge verknüpfen Messsignale zweier Messköpfe miteinander. Bspw. verknüpft der Geschwindigkeitsbetrag v$_a$ die Messsignale zweier Messköpfe 1 und 1', der Geschwindigkeitsbetrag v$_b$ verknüpft die Messsignale zweier Messköpfe 1' und 1" und der Geschwindigkeitsbetrag v$_c$ verknüpft die Messsignale zweier Messköpfe 1" und 1. Von diesen drei Geschwindigkeitsbeträgen werden zwei für die Bestimmung eines unabhängigen Geschwindigkeitsvektors verwendet. Dieser Geschwindigkeitsvektor bezieht sich auf einen Messkopf, mit dem zwei Geschwindigkeitsbeträge verknüpft sind. Bspw. bezieht sich der Geschwindigkeitsvektor auf einen ersten Messkopf 1' mit den zwei Geschwindigkeitsbeträgen v$_a$ und v$_b$ verknüpft sind. Diese Geschwindigkeitsvektorbestimmung erfolgt vorteilhafterweise durch Vektorauftrag. Dies wird beispielhaft in Fig. 12 veranschaulicht. Der Betrag des einen Geschwindigkeitsbetrages v$_a$ wird in Richtung der Verbindung vom ersten Messkopf 1' zum ersten verknüpften Messkopf 1 aufgetragen, der Betrag des zweiten Geschwindigkeitsbetrages v$_b$ wird in Richtung der Verbindung vom ersten Messkopf 1' zum zweiten verknüpften Messkopf 1" aufgetragen. Mit c = v$_b$ - v$_a$ wird ein Verbindungsvektor definiert. Der Geschwindigkeitsvektor v ist der Abstandsvektor zwischen dem ersten Messkopf 1' und der Verbindung zwischen den Enden der derart aufgetragenen Geschwindigkeitsbeträge v$_a$ und v$_b$:

$$v = v_a + \frac{-v_a \cdot c}{c^2} \cdot c = v_a + \frac{-v_a \cdot (v_b - v_a)}{(v_b - v_a)^2}(v_b - v_a)$$

Durch zyklisches Vertauschen der drei Geschwindigkeitsbeträge wird für jeden Messkopf ein solcher Geschwindigkeitsvektor gebildet. Solche Geschwindigkeitsvektoren-Triple stimmen im Rahmen einer frei festlegbaren Messtoleranz überein. Dies ermöglicht eine einfache und rasche Überprüfung des Messverfahrens, indem die drei Geschwindigkeitsvektoren mittels eines Variationskoeffizienten verglichen werden. Geschwindigkeitsvektor-Triple, die nicht der festgelegten Messtoleranz entsprechen, werden ausgeschieden, falls die anfangs postulierten Voraussetzungen bezüglich Homogenität der Strömung bzw. Ströme, usw. nicht erfüllt sind.

Vorteilhafterweise erfolgt eine solche Auswertung der Messsignale in der Auswerteeinheit mittels frei setzbarer Messfenster. Fig. 11 zeigt einen Teil einer beispielhaften Ausführungsform einer solchen Auswerteeinheit 20 mit zueinander versetzt angeordneten Messfenstern 21,21',21". Messsignale werden über Messleitungen 3,3',3" zugeführt. Jedes dieser Messfenster erfasst eine bestimmte Anzahl von Messsignalen. Als Auswerteeinheiten lassen sich handelsübliche Computer mit Schnittstellen zum Erfassen der Messsignale einsetzen.

Das vorliegende Verfahren erlaubt es insbesondere Geschwindigkeits- und Konzentrationsmessungen simultan durchzuführen. Dies kann off-line, online oder in-line erfolgen. Insbesondere erlaubt das vorliegende Verfahren eine permanente in-line Prozessüberwachung. Hierbei lassen sich bspw. Feststoff-Konzentrationen im Bereich 1g/m$^3$ - 1'500 kg/m$^3$ in-line bestimmen.

Das vorliegende Verfahren erlaubt es, Normierungen der erfassten physikalischen Parameter durchzuführen. Eine Normierung ist optional. Bspw. ermöglicht sie eine Bestimmung von messgerätunabhängigen Kalibrationsdaten. Auch ermöglicht sie bspw. Vorortkontrollen der Stabilität von Messgeräten. Solche Vorortkontrollen können in periodischen bzw. aperiodischen zeitlichen Abständen durchgeführt werden. Die Normierung der erfassten Parameter wird anhand der beispielhaften Ausführungsform einer Normierungsvorrichtung 6 gemäss Fig. 14 gezeigt. Diese Normierungsvorrichtung ist für bspw. Konzentrationsmessung von Strömungen bzw. Strömen mittels Lichtintensität. In dieser Ausführungsform ist die Normierungsvorrichtung ein Normierungs-Reflektor in der Form einer Kappe. Dieser Normierungs-Reflektor wird mit einem lichtundurchlässigen Abschluss auf mindestens einen Messkopf 1 mit Lichtleitemitteln 2 gesetzt. Zur Unterstützung von Fremdlichteinfluss ist der Normierungs-Reflektor selbst nicht lichtundurchlässig und enthält mindestens zwei, im Strahlengang des emittierten und reflektierten Lichtes angeordnete teilweise lichtdurchlässige Reflektorelemente 60,60',60" auf. Die Reflektorelemente sind bspw. plattenförmig und aus teilweise lichtdurchlässigem Material wie Glas, Plastik, Metall, usw.. Durch eine solche wiederholte Reflexion/Transmission wird bspw. eine Zwei-Stoff-Strömung bzw. einen Strom simuliert. Die Summe des reflektierten Lichtes wird vom mindestens einen Messkopf als Parameter erfasst und das daraus ermittelte Messsignal als Normierungssignale für eine Normierung verwendet. Bei Kenntnis der vorliegenden Erfindung hat der Fachmann vielfältige Möglichkeiten der Realisierung von Normierungsvorrichtungen zur Verwendung im Messsystem.

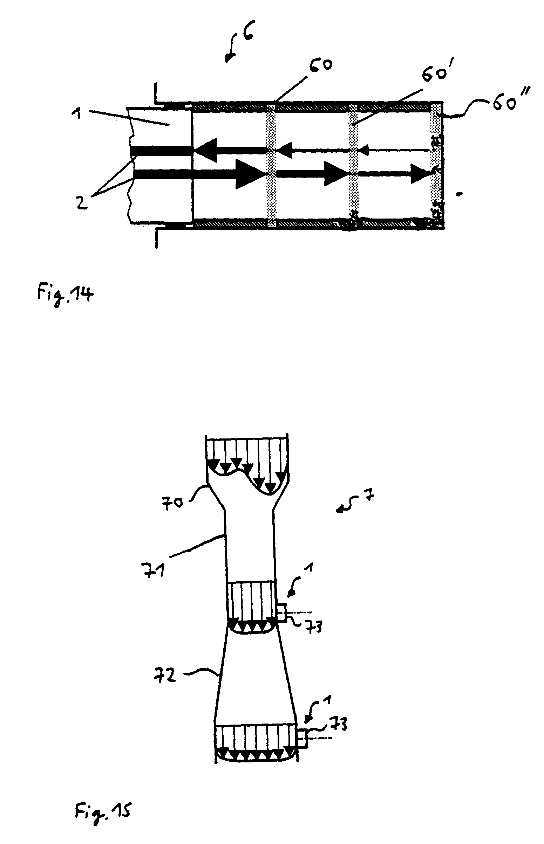

Das vorliegende Verfahren erlaubt es bei Konzentrations- bzw. Geschwindigkeitsbestimmungen von Strömungen bzw. Strömen auch repräsentative Mittelwerte zu ermitteln. Solche repräsentative Mittelwerte werden bspw. für Durchsatzmessungen benötigt. Eine solche Ermittlung von repräsentativen Mittelwerten wird anhand einer Homogenisiervorrichtung 7 in der beispielhaften Ausführungsform gemäss Fig. 15 gezeigt. Eine Homogenisiervorrichtung ist optional. Die Homogenisiervorrichtung arbeitet bspw. mit dem physikalischen Parameter Lichtintensität. Bspw. wird sie in die Förderleitung der Strömung bzw. des Stroms vor den mindestens einen Messkopf 1 montiert. Die Homogenisiervorrichtung weist einen Einlauf 70 für eine Beschleunigung der Strömung bzw. des Stroms auf. Ferner weist sie eine Homogenisier-Strecke 71 zur Homogenisierung der Konzentrations- bzw. der Geschwindigkeitsverteilung der Strömung bzw. des Stroms auf. In der Homogenisier-Strecke werden bspw. Feststoff-Strähnen der Strömung bzw. des Strom durch Beschleunigung und/oder erhöhte Turbulenz dispergiert. Das Messvolumen wird durch die Strömung bzw. den Strom begrenzt resp. es hängt vom Messprinzip ab und wird von der Homogenisiervorrichtung nicht beeinflusst. Am Ausgang der Homogenisier-Strecke ist ein Auslauf 72 angebracht. Der Auslauf ist bspw. ein schlanker Diffusor und erlaubt den am Einlauf erfolgten Beschleunigungsdruckabfall der Strömung bzw. des Stroms weitgehend wieder zurückzugewinnen. Die Homogenisier-Strecke lässt sich an unterschiedliche Rohrdurchmesser anpassen. Sie lässt sich mit verschiedenen Messsystemen betreiben und weist mehrere mögliche Messpositionen 73 zur Montage von mindestens einem Messkopf auf. Wird ein Messkopf in die Homogenisier-Strecke eingebracht, deckt das begrenzte resp. endliche Messvolumen des Messkopfes einen grösseren oder den ganzen Teil des Rohrdurchmessers ab. Somit wird ein grösserer Teil einer/eines durch die Homogenisierung repräsentativer gewordenen Strömung bzw. Stromes erfasst, wodurch eine höhere Messgenauigkeit erreicht wird.

Verschmutzungen durch das Strömungs- bzw. Strommedium können zu Messfehlern sowie Messausfällen führen. Um solche Verschmutzungen der Messköpfe durch das Strömungs- bzw. Strommedium zu verhindern, ist eine Reinigungsvorrichtung vorgesehen. Diese Reinigungsvorrichtung ist optional, das Messverfahren ist auch ohne sie durchführbar. Insbesondere ist sie für Strömungs- bzw. Strommedien vorgesehen, welche sich leicht an den Messköpfen festsetzen und diese bedecken. In einer beispielhaften Ausführungsform besteht die Reinigungsvorrichtung aus einer Reinigungsfluidströmung zwischen den Messköpfen und dem Strömungs- bzw. Strommedium, welche derart ausgestaltet ist, dass das Strömungs- bzw. Strommedium nicht an die Messköpfe gelangen kann. Als Reinigungsfluide lassen sich bekannte Industrieflüssigkeiten und -gase wie Wasser, Luft, Edelgase, Stickstoff, usw. verwenden. Vorteilhafterweise strömt die Reinigungsfluidströmung über Zu- und Wegführungen 4,4' und Umlenkungen 5 zu einem flachen Reinigungsvolumen zwischen den Messköpfen und dem Strömungsmedium und verhindern auf diese Weise ein Festsetzen vom Strömungs- bzw. Strommedium auf den Messköpfen. Ein solches flaches Reinigungsvolumen ist bspw. nur einige Millimeter dick, so dass ein nur einige Millimeter dicker Reinigungsfluidfilm gebildet wird. Die Zu- und Wegführungen und Umlenkungen sind derart gestaltet und angeordnet, dass die Reinigungsfluidströmung selbst die Konzentrations- und Geschwindigkeitsmessungen nicht beeinträchtigt/stört/verfälscht. Vorteilhafterweise wird die Reinigungsfluidströmung durch die Umlenkvorrichtung umgelenkt, derart dass die Reinigungsfluidströmung in Richtung der Messkopfachsen weitgehend impulsfrei ist. Bei der Ausgestaltung einer solchen Reinigungsvorrichtung stehen dem Fachmann vielfältige Möglichkeiten der Ausgestaltung frei. So sind in der beispielhaften Ausführung gemäss Fig. 5 Umlenkungen 5 nahe der Messköpfe 1 und optionale Rückschlagventile 8 in Zuführungen 4 vorgesehen.

**Patentansprüche**

1. Verfahren zum Bestimmen von ein- bzw. zweidimensionalen Geschwindigkeiten von Strömungen bzw. Strömungen, unter Verwendung von Fluktuationen charakteristischer physikalischer Parameter, **dadurch gekennzeichnet,**

   dass Fluktuationen der Parameter von mindestens zwei Messköpfen (1,1',1") erfasst werden,
   dass erfasste Fluktuationen der Parameter in Messsignale gewandelt werden,
   dass diese Messsignale korreliert werden,
   dass aus dieser Korrelation Verschiebungszeiten zwischen den Messköpfen bestimmt wird und
   dass als Messkopfabstand der gegenseitige Abstand der Messköpfe ermittelt wird,
   woraus Geschwindigkeiten in Strömungen bzw. Strömen aus dem Quotienten des Messkopfabstandes und den Verschiebungszeiten gebildet werden.

2. Verfahren gemäss Anspruch 1, **dadurch gekennzeichnet,** dass als Parameter die Rückstreuung von Licht verwendet wird, dass Licht von mindestens zwei Messköpfen in die Strömungen bzw. den Strom ausgesendet und Fluktuationen der zurückgestreuten Lichtintensität erfasst werden, dass erfasstes zurückgestreutes Licht in Messsignale gewandelt wird, dass diese Messsignale korreliert werden, dass aus dieser Korrelation Verschiebungszeiten zwischen den Messköpfen hin bestimmt werden und dass als Messkopfabstand ein optischer Messkopfabstand aus dem gegenseitigen Abstand des Lichts am Ort der Rückstreuung ermittelt wird, woraus Geschwindigkeiten in Strömungen bzw. Strömen aus dem Quotienten des optischen Messkopfabstandes und der Verschiebungszeiten gebildet werden.

3. Verfahren gemäss Anspruch 1 oder 2, **dadurch gekennzeichnet,** dass eine eindimensionale Geschwindigkeitsbestimmung mit zwei Messköpfen durchgeführt bzw. dass eine zweidimensionale Geschwindigkeitsbestimmung mit drei Messköpfen durchgeführt wird.

4. Verfahren gemäss Anspruch 2 oder 3, **dadurch gekennzeichnet,** dass ein effektiver optischer Abstand der Messköpfe durch eine in der Messebene senkrecht zur Strömung bzw. zum Strom durchgeführte Projektion des optischen Messkopfabstandes parallel zum Fluss ermittelt wird.

5. Verfahren gemäss einem der Ansprüche 1 bis 4, **dadurch gekennzeichnet,** dass zueinander versetzt angeordnete Messköpfe in einer Messebene senkrecht zur Strömung bzw. zum Strom ausgerichtet werden.

6. Verfahren gemäss Anspruch 4 oder 5, **dadurch gekennzeichnet,** dass eine eindimensionale Geschwindigkeitsbestimmung mit zwei Messköpfen durchgeführt wird und dass Betrag und Richtung der eindimensionalen Geschwindigkeit entlang der Verbindung dieser zwei Messköpfe aus dem Quotienten eines effektiven optischen Messkopfabstandes und den Verschiebungszeiten gebildet werden.

7. Verfahren gemäss Anspruch 4 oder 5, **dadurch gekennzeichnet,** dass eine zweidimensionale Geschwindigkeitsbestimmung mit drei Messköpfen durchgeführt wird und dass drei Geschwindigkeitsbeträge aus den Quotienten eines effektiven optischen Messkopfabstandes und den Verschiebungszeiten gebildet werden.

8. Verfahren gemäss Anspruch 7, **dadurch gekennzeichnet,** dass zur Bestimmung eines Geschwindigkeitsvektors zwei Geschwindigkeitsbeträge welche einen ersten Messkopf mit zwei weiteren Messköpfen verknüpfen als Vektoren aufgetragen werden, dass der Betrag des einen Geschwindigkeitsbetrages in Richtung der Verbindung vom ersten Messkopf zum ersten verknüpften Messkopf aufgetragen wird, dass der Betrag des zweiten Geschwindigkeitsbetrages in Richtung der Verbindung vom ersten Messkopf zum zweiten verknüpften Messkopf aufgetragen wird und dass der Geschwindigkeitsvektor durch den Abstandsvektor zwischen dem ersten Messkopf und der Verbindung zwischen den Enden der derart aufgetragenen zwei Geschwindigkeitsbeträgen gebildet wird.

9. Verfahren gemäss Anspruch 8, **dadurch gekennzeichnet**, dass für jeden der drei Messköpfe ein Geschwindigkeitsvektor ermittelt wird und dass Geschwindigkeitsvektoren-Triple mittels eines Variationskoeffizienten verglichen werden, so dass Geschwindigkeitsvektoren-Triple, die nicht der festgelegten Messtoleranz entsprechen, ausgeschieden werden.

10. Verfahren zum Bestimmen von Konzentrationen von Strömungen bzw. Strömen, unter Verwendung von charakteristische physikalischen Parametern, **dadurch gekennzeichnet,**

dass Parameter von mindestens einem Messkopf (1,1',1") erfasst werden,
dass erfasste Parameter in Messsignale gewandelt werden,
dass diese Messsignale als Funktion der Konzentration aufgetragen werden und mittels Kalibrierungsparameter über eine mathematische Funktion miteinander verknüpft werden.

11. Verfahren gemäss Anspruch 10, **dadurch gekennzeichnet,** dass als Parameter die Rückstreuung von Licht verwendet wird, dass Licht von mindestens einem Messkopf in die Strömungen bzw. den Strom ausgesendet und zurückgestreute Lichtintensitäten erfasst werden, dass erfasstes zurückgestreutes Licht in Messsignale gewandelt wird, dass das Verhältnis zwischen zurückgestreuten Lichtintensitäten und der Konzentration gemessen wird, dass diese Messsignale als Funktion der Konzentration aufgetragen werden und mittels Kalibrierungsparameter über eine mathematische Funktion miteinander verknüpft werden.

12. Verfahren gemäss einem der Ansprüche 1 bis 11, **dadurch gekennzeichnet,** dass simultan eine Bestimmung von Konzentration und Geschwindigkeit der Strömungen bzw. Strömen erfolgt.

13. Verfahren gemäss einem der Ansprüche 1 bis 12, **dadurch gekennzeichnet,** dass eine permanente in-line Prozessüberwachung erfolgt.

14. Verfahren gemäss einem der Ansprüche 2 bis 9 oder 11 bis 13, **dadurch gekennzeichnet**, dass eine Normierungsvorrichtung (6) mit mindestens zwei teilweise lichtdurchlässigen Reflektorelementen (60,60',60") auf mindestens einen Messkopf gesetzt wird, wodurch eine Strömung bzw. einen Strom simuliert wird und Normierungsignale geliefert werden.

15. Verfahren gemäss einem der Ansprüche 2 bis 9 oder 11 bis 13, **dadurch gekennzeichnet,** dass eine Homogeniservorrichtung (7) mit einem Einlauf (70) zum Beschleunigen der Strömung bzw. des Stroms und mit einer Homogenisier-Strecke (71) zur Homogenisierung der Konzentrations- bzw. Geschwindigkeitsverteilung der Strömung bzw. des Stroms auf mindestens einen Messkopf aufgesetzt wird, wodurch dass Messvolumen begrenzt wird.

16. Messsystem zum Bestimmen von Konzentrationen bzw. von Geschwindigkeiten von ein- bzw. zweidimensionalen Strömungen bzw. Strömen, unter Verwendung von charakteristischen physikalischen Parametern, **dadurch gekennzeichnet,** dass es eine Messsonde (10) aufweist, in der alle optischen bzw. elektronischen Komponenten integriert und vor Umwelteinflüssen wirkungsvoll geschützt sind, dass es ein Netzgerät zur Versorgung der Messsonde aufweist und dass es eine computergesteuerte Auswerteeinheit zum Auswerten der von der Messsonde gemessenen Messsignale aufweist.

17. Messsystem gemäss Anspruch 16, **dadurch gekennzeichnet,** dass zwei zueinander versetzt angeordnete Messköpfe (1,1',1") die Geschwindigkeit eines eindimensionalen Flusses erfassen bzw. dass drei zueinander versetzt angeordnete Messköpfe (1,1',1") die Geschwindigkeit eines zweidimensionalen Flusses erfassen.

18. Messsystem gemäss Anspruch 16, **dadurch gekennzeichnet,** dass es über mindestens einen Messkopf (1,1',1") Parameter erfasst, dass es erfasste Parameter in Messsignale wandelt und dass es Messsignale als Funktion der Konzentration aufträgt und mittels Kalibrierungsparameter über eine mathematische Funktion miteinander verknüpft.

19. Messsystem gemäss Anspruch 16 oder 17, **dadurch gekennzeichnet,** dass die Messköpfe derart in einer Ebene senkrecht zur Strömung bzw. zum Strom angeordnet sind, dass sie von der Strömung bzw. vom Strom zurückgestreutes Licht erfassen und dass die Projektion vom optischen Messkopfabstand parallel zum Fluss den effektive optischen Messkopfabstand bildet.

20. Messsystem gemäss einem der Ansprüche 16 bis 19, **dadurch gekennzeichnet,** dass in der Messsonde Lichtleitermittel (2) Licht auf eine spezielle Optik führen, welche ein definiertes Messvolumen bildet, dass Sensoren die Intensität des von der Strömung bzw. vom Strom zurückgestreuten Lichtes erfassen und Messignale über Messleitungen (3,3',3") zur Auswerteeinheit leiten.

21. Messsystem gemäss Anspruch 20, **dadurch gekennzeichnet,** dass eine Normierungsvorrichtung (6) mit mindestens zwei teilweise lichtdurchlässigen Reflektorelemente (60,60',60") zum Aufsetzen auf mindestens einen Messkopf eine Strömung bzw. einen Strom simuliert und Normierungsignale liefert.

22. Messsystem gemäss einem der Ansprüche 16 bis 20, **gekennzeichnet durch** eine Homogeniservorrichtung (7), die mit einem Einlauf (70) die Strömung bzw. den Strom beschleunigt und die mit einer Homogenisier-Strecke (71) die Konzentrations- bzw. Geschwindigkeitsverteilung der Strömung bzw. des Stroms homogenisiert und an der mindestens ein Messkopf angebracht ist.

23. Messsystem gemäss Anspruch 17 oder 18, **dadurch gekennzeichnet,** dass zwischen dem mindestens einen Messkopf und dem Strömungs- bzw. dem Strommedium eine Reinigungsfluidströmung strömt und ein Festsetzen vom Stömungs- bzw Strommedium auf dem mindestens einen Messkopf verhindert.

24. Messsystem gemäss Anspruch 23, **dadurch gekennzeichnet,** dass die Reinigungsfluidströmung in einem flachen Reinigungsfluidvolumen strömt und dass sie eine Umlenkvorrichtung umlenkt, derart dass die Reinigungsfluidströmung in Richtung der Messkopfachsen weitgehend impulsfrei ist.

Fig.1

Fig.2

Fig.12

Fig.3

Fig.4

Fig.5

Fig. 8

Fig. 9

2

4

Fig.7

1

2

Fig.10

2

1

4

Fig.6

Fig. 11

Fig. 13

Fig. 14

Fig. 15

**Europäisches Patentamt**

## EUROPÄISCHER RECHERCHENBERICHT

Nummer der Anmeldung

EP 99 12 3073

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | CH 572 623 A (SCHULZ WALZ AXEL) 13. Februar 1976 (1976-02-13) * Spalte 1, Zeile 46 - Spalte 4, Zeile 21; Abbildungen 1-5 * | 1-6 | G01F1/708 G01F1/704 G01F1/712 |
| Y | | 12,16, 17,19,20 | |
| | --- | | |
| X | EP 0 902 276 A (TOSHIBA K.K.) 17. März 1999 (1999-03-17) * Zusammenfassung; Abbildung 3 * | 10 | |
| Y | | 11 | |
| | --- | | |
| Y | DD 239 472 A (TECHNISCHE HOCHSCHULE LEIPZIG) 24. September 1986 (1986-09-24) * Zusammenfassung * * Seite 2; Abbildungen 1,2 * | 11 | |
| | --- | | |
| Y | F. ONOFRI ET AL: "Size , velocity , and concentration in suspension measurements of spherical droplets and cylindrical jets" APPLIED OPTICS, Bd. 38, Nr. 21, 20. Juli 1999 (1999-07-20), Seiten 4681-4690, XP002131474 USA * Zusammenfassung; Abbildung 5 * | 12 | |
| A | | 18 | RECHERCHIERTE SACHGEBIETE (Int.Cl.7) G01F |
| | --- | | |
| Y | WO 93 19376 A (ELECTRICITE DE FRANCE ;LHESA ELECTRONIQUE (FR)) 30. September 1993 (1993-09-30) * Zusammenfassung; Abbildung 1 * | 16,17, 19,20 | |
| | --- | | |
| A | EP 0 100 304 A (GULLFIBER AB) 8. Februar 1984 (1984-02-08) * Zusammenfassung; Abbildungen 1,2 * | 1 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| BERLIN | 23. März 2000 | Vorropoulos, G |

EPO FORM 1503 03.82 (P04C03)

**Europäisches Patentamt**

# EUROPÄISCHER RECHERCHENBERICHT

Nummer der Anmeldung

EP 99 12 3073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 479 676 A (SAINT GOBAIN ISOVER) 8. April 1992 (1992-04-08) * Zusammenfassung; Abbildungen 3,4 * ----- | 1 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| BERLIN | 23. März 2000 | Vorropoulos, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**     EP 99 12 3073

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2000

| Im Recherchenbericht angeführtes Patentdokument | Datum der Veröffentlichung | Mitglied(er) der Patentfamilie | Datum der Veröffentlichung |
|---|---|---|---|
| CH 572623 A | 13-02-1976 | DE 2401322 A | 24-07-1975 |
| EP 902276 A | 17-03-1999 | JP 11083761 A | 26-03-1999 |
| | | CA 2246958 A | 11-03-1999 |
| DD 239472 A | 24-09-1986 | KEINE | |
| WO 9319376 A | 30-09-1993 | FR 2689247 A | 01-10-1993 |
| | | EP 0586661 A | 16-03-1994 |
| EP 0100304 A | 08-02-1984 | SE 431030 B | 27-12-1983 |
| | | AT 21771 T | 15-09-1986 |
| | | AU 569202 B | 21-01-1988 |
| | | AU 1604483 A | 30-12-1983 |
| | | BR 8307389 A | 08-05-1984 |
| | | DK 61384 A | 10-02-1984 |
| | | FI 840550 A,B, | 10-02-1984 |
| | | IN 157842 A | 05-07-1986 |
| | | JP 59501027 T | 07-06-1984 |
| | | NO 840502 A | 10-02-1984 |
| | | SE 8203650 A | 12-12-1983 |
| | | WO 8304437 A | 22-12-1983 |
| | | US 4517845 A | 21-05-1985 |
| EP 0479676 A | 08-04-1992 | FR 2667689 A | 10-04-1992 |
| | | AT 146587 T | 15-01-1997 |
| | | AU 650283 B | 16-06-1994 |
| | | AU 8466391 A | 09-04-1992 |
| | | CA 2052530 A | 05-04-1992 |
| | | DE 69123685 D | 30-01-1997 |
| | | FI 914658 A | 05-04-1992 |
| | | JP 4248415 A | 03-09-1992 |
| | | NO 913865 A | 06-04-1992 |
| | | TR 28899 A | 05-08-1997 |
| | | US 5170060 A | 08-12-1992 |
| | | ZA 9107603 A | 24-06-1992 |

EPO FORM P0461

Für nähere Einzelheiten zu diesem Anhang : siehe Amtsblatt des Europäischen Patentamts, Nr.12/82